(19) **Europäisches Patentamt / European Patent Office / Office européen des brevets**

(11) **EP 4 583 344 A1**

(12) **EUROPEAN PATENT APPLICATION**
published in accordance with Art. 153(4) EPC

(43) Date of publication:
**09.07.2025 Bulletin 2025/28**

(21) Application number: 23853683.3

(22) Date of filing: **14.12.2023**

(51) International Patent Classification (IPC):
*H02J 3/12* (2006.01)

(52) Cooperative Patent Classification (CPC):
**G06F 17/10; H02J 3/10; H02J 3/12; H02J 3/16; H02J 3/18; H02J 3/24; H02J 3/38; H02J 3/48; H02J 3/50**

(86) International application number:
**PCT/CN2023/138820**

(87) International publication number:
**WO 2025/097548 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.11.2023 CN 202311482164**

(71) Applicant: **China Electric Power Research Institute**
**Beijing 100192 (CN)**

(72) Inventors:
• **LAN, Tiankai**
  **Beijing 100192 (CN)**
• **XU, Shiyun**
  **Beijing 100192 (CN)**
• **ZHAO, Bing**
  **Beijing 100192 (CN)**
• **SUN, Huadong**
  **Beijing 100192 (CN)**

(74) Representative: **White, Andrew John et al**
**Mathys & Squire**
**The Shard**
**32 London Bridge Street**
**London SE1 9SG (GB)**

(54) **POWER GRID VOLTAGE STABILITY ANALYSIS METHOD AND SYSTEM TAKING INTO ACCOUNT NEW ENERGY CONTROL SWITCHING, ELECTRONIC DEVICE, STORAGE MEDIUM AND COMPUTER PROGRAM PRODUCT**

(57)    Method and system of analyzing power grid voltage stability considering renewable energy source control switching, electronic device, storage media and computer program product are provided in the present invention. The method includes that: operation 2: time-domain simulation for a preset time is performed on a mathematical model and a state transition model, and if the renewable energy source enters ride-through state during the time-domain simulation, operation 3 is directly entered, otherwise, attention information is output before entering operation 3; operation 3: based on an electrical model and under the rated operation mode of the power system, power flow of the power system is calculated to obtain a terminal voltage of the renewable energy source; operation 4: based on the electrical model and the mathematical model and under the rated operation mode of the power system, the power flow of the power system is calculated to obtain bus voltage of the POC bus; based on the terminal voltage, threshold voltage for the renewable energy source entering the ride-through state and the bus voltage, corresponding prompt information is output.

EP 4 583 344 A1

| establishing an electrical model of power system comprising renewable energy source, establishing a mathematical model for reflecting ride-through control characteristics of the renewable energy source, and establishing a state transition model for switching between different control modes of the renewable energy source | Operation 1 |

| determining a rated operation mode of the power system, active power output of the renewable energy source and reactive power output of the renewable energy source; performing time-domain simulation for a preset time on the mathematical model and the state transition model, and if the renewable energy source enters ride-through state during the time-domain simulation, directly entering operation 3, otherwise, outputting attention information before entering operation 3; the attention information is used for indicating a user to pay attention to a ride-through control mode of the electrical model | Operation 2 |

| based on the electrical model and under the rated operation mode of the power system, taking a point in which the renewable energy source is connected to the power grid as a PQ point, setting an active power of the point in which the renewable energy source is connected to the power grid as the active power output of the renewable energy source, setting a reactive power of the point in which the renewable energy source is connected to the power grid as the reactive power output of the renewable energy source, and calculating power flow of the power system to obtain a terminal voltage of the renewable energy source | Operation 3 |

| based on the electrical model and the mathematical model and under the rated operation mode of the power system, connecting a constant impedance load and a constant current load to a Point of Connection (POC) bus of the electrical model, setting the active power and the reactive power of the point in which the renewable energy source is connected to the power grid to 0, and calculating the power flow of the power system to obtain a bus voltage of the POC bus | Operation 4 |

| comparing the terminal voltage with a threshold voltage for the renewable energy source entering the ride-through state; if the terminal voltage is greater than the threshold voltage, entering operation 6; otherwise, entering operation 7 | Operation 5 |

| comparing the bus voltage with the threshold voltage; if the bus voltage is greater than the threshold voltage, outputting a first prompt information; if the bus voltage is not greater than the threshold voltage, outputting a second prompt information; the first prompt information is used for indicating that there is no risk of voltage instability caused by ride-through and switching, and the second prompt information is used for indicating that there is a risk of a voltage instability or a renewable energy source off-grid caused by continuous ride-through and non-recovery of the renewable energy source | Operation 6 |

| comparing the bus voltage with the threshold voltage; if the bus voltage is greater than the threshold voltage, outputting a third prompt information; if the bus voltage is not greater than the threshold voltage, outputting a fourth prompt information; the third prompt information is used for indicating that there is a risk of voltage and power oscillations or a risk of the renewable energy source off-grid caused by the renewable energy source repeatedly entering and exiting ride-through, and the fourth prompt information is used for indicating that there is a risk of voltage instability or the renewable energy source off-grid caused by continuous ride-through and non-recovery of the renewable energy source | Operation 7 |

**FIG. 1**

**Description**

CROSS-REFERENCE TO RELATED APPLICATION

Embodiments of the present disclosure are based on and claim the benefit of priority of the Chinese Patent Application No. 2023114821648, filed on November 09, 2023, and entitled "METHOD AND SYSTEM OF ANALYZING POWER GRID VOLTAGE STABILITY CONSIDERING RENEWABLE ENERGY SOURCE CONTROL SWITCHING", which is incorporated by reference herein in its entirety.

TECHNICAL FIELD

The present disclosure relates to, but is not limited to, a technical field of a power system stability analysis, in particular to a method and system of analyzing a power grid voltage stability considering renewable energy source control switching, an electronic device, a storage medium and a computer program product.

BACKGROUND

Static voltage stability margin of power system with renewable energy source is of great significance, but related technologies is still unable to analyze the influence of ride-through and control switching of the renewable energy source on voltage stability.

SUMMARY

Embodiments of the present disclosure provide a method and system of analyzing a power grid voltage stability considering renewable energy source control switching, an electronic device, a storage medium and a computer program product.

The embodiment of the disclosure provides a method of analyzing a power grid voltage stability considering renewable energy source control switching, the method includes the following operations.

Operation 1: an electrical model of power system including renewable energy source is established, a mathematical model for reflecting ride-through control characteristics of the renewable energy source is established, and a state transition model for switching between different control modes of the renewable energy source is established.

Operation 2: rated operation mode of the power system, active power output of the renewable energy source and reactive power output of the renewable energy source are determined; time-domain simulation for a preset time is performed on the mathematical model and the state transition model, and if the renewable energy source enters ride-through state during the time-domain simulation, operation 3 is directly entered, otherwise, attention information is output before entering operation 3; herein the attention information is used for indicating a user to pay attention to a ride-through control mode of the electrical model.

Operation 3: based on the electrical model and under the rated operation mode of the power system, a point in which the renewable energy source is connected to the power grid is taken as a PQ point, an active power of the point in which the renewable energy source is connected to the power grid is set as the active power output of the renewable energy source, a reactive power of the point in which the renewable energy source is connected to the power grid is set as the reactive power output of the renewable energy source, and power flow of the power system is calculated to obtain a terminal voltage of the renewable energy source.

Operation 4: based on the electrical model and the mathematical model and under the rated operation mode of the power system, a constant impedance load and a constant current load are connected to a Point of Connection (POC) bus of the electrical model, the active power and the reactive power of the point in which the renewable energy source is connected to the power grid are set to 0, and the power flow of the power system is calculated to obtain a bus voltage of the POC bus.

Operation 5: the terminal voltage is compared with a threshold voltage for the renewable energy source entering the ride-through state; if the terminal voltage is greater than the threshold voltage, operation 6 is entered; otherwise, operation 7 is entered.

Operation 6: the bus voltage is compared with the threshold voltage; if the bus voltage is greater than the threshold voltage, a first prompt information is output; if the bus voltage is not greater than the threshold voltage, a second prompt information is output; herein the first prompt information is used for indicating that there is no risk of voltage instability caused by ride-through and switching, and the second prompt information is used for indicating that there is a risk of a voltage instability or a renewable energy source off-grid caused by continuous ride-through and non-recovery of the renewable energy source.

Operation 7: the bus voltage is compared with the threshold voltage; if the bus voltage is greater than the threshold voltage, a third prompt information is output; if the bus voltage is not greater than the threshold voltage, a fourth prompt information is output; herein the third prompt information is used for indicating that there is a risk of voltage and power oscillations or a risk of the renewable energy source off-grid caused by the renewable energy source repeatedly entering and exiting ride-through, and the fourth prompt information is used for indicating that there is a risk of voltage instability or the renewable energy source off-grid caused by continuous ride-through and non-recovery of the renewable energy source.

In some embodiments, the electrical model may be composed of: a distribution grid with distributed renewable energy source, a main grid and an equivalent voltage source; or an aggregate renewable energy source station, a main grid and an equivalent voltage source.

In some embodiments, the mathematical model may be expressed as follows.

$$I_P = SK_{P1}V_t + K_{P2}I_{P0} + SI_{Pset} ;$$

$$I_Q = SK_{Q1}(V_L - V_t) + SI_{Qset} .$$

Where, S represents a rated capacity of the renewable energy source, $I_P$ represents an active current during the ride-through of the renewable energy source, $I_Q$ represents a reactive current during the ride-through of the renewable energy source, $I_{P0}$ represents an active current before the renewable energy source enters the ride-through state, $K_{P1}$ represents a first control parameter of the active current during the ride-through of the renewable energy source, $K_{P2}$ represents a second control parameter of the active current during the ride-through of the renewable energy source, $I_{Pset}$ represents a bias parameter of the active current during the ride-through of the renewable energy source, $K_{Q1}$ represents a control parameter of the reactive current during the ride-through of the renewable energy source, $I_{Qset}$ represents a bias parameter of the reactive current during the ride-through of the renewable energy source, $V_L$ represents the threshold voltage for the renewable energy source entering the ride-through state, and $V_t$ represents the terminal voltage of the renewable energy source.

In some embodiments, a state transition logic of the state transition model may be as follows.

When a control mode of the renewable energy source at present is a normal state, if the terminal voltage of the renewable energy source is less than the threshold voltage, the control mode of the renewable energy source is transitioned from the normal state to the ride-through state.

When the control mode of the renewable energy source at present is the ride-through state, if the terminal voltage of the renewable energy source is greater than the threshold voltage and no ride-through recovery function is configured for the renewable energy source, the control mode of the renewable energy source is transitioned from the ride-through state to the normal state.

When the control mode of the renewable energy source at present is the ride-through state, if the terminal voltage of the renewable energy source is greater than the threshold voltage and the ride-through recovery function is configured for the renewable energy source, the control mode of the renewable energy source is transitioned from the ride-through state to a recovery state.

When the control mode of the renewable energy source at present is the recovery state, if the terminal voltage of the renewable energy source is greater than the threshold voltage and the active power of the renewable energy source is not less than an active power in the normal state, the control mode of the renewable energy source is transitioned from the recovery state to the normal state.

When the control mode of the renewable energy source at present is the recovery state, if the terminal voltage of the renewable energy source is less than the threshold voltage, the control mode of the renewable energy source is transitioned from the recovery state to the ride-through state.

The disclosure also provides a system of analyzing a power grid voltage stability considering renewable energy source control switching, the system includes: a model establishing section, a determining section, a first calculation section, a second calculation section, a comparison section, a first prompt section and a second prompt section.

The model establishing section is configured to establish an electrical model of power system including renewable energy source, establish a mathematical model for reflecting ride-through control characteristics of the renewable energy source, and establish a state transition model for switching between different control modes of the renewable energy source.

The determining section is configured to determine rated operation mode of the power system, active power output of the renewable energy source and reactive power output of the renewable energy source; perform time-domain simulation for a preset time on the mathematical model and the state transition model, and if the renewable energy source enters ride-through state during the time-domain simulation, a computational processing is directly performed by a first calculation section, otherwise, attention information is output before performing a computational processing by a first calculation section; herein the attention information is used for indicating a user to pay attention to a ride-through control mode of the electrical model.

The first calculation section is configured to, based on the electrical model and under the rated operation mode of the power system, take a point in which the renewable energy source is connected to the power grid as a PQ point, set an active power of the point in which the renewable energy source is connected to the power grid as the active power output of the renewable energy source, set a reactive power of the point in which the renewable energy source is connected to the power grid as the reactive power output of the renewable energy source, and calculate power flow of the power system to obtain a terminal voltage of the renewable energy source.

The second calculation section is configured to, based on the electrical model and the mathematical model and under the rated operation mode of the power system, connect a constant impedance load and a constant current load to a POC bus of the electrical model, set the active power and the reactive power of the point in which the renewable energy source is connected to the power grid to 0, and calculate the power flow of the power system to obtain a bus voltage of the POC bus.

The comparison section is configured to compare the terminal voltage with threshold voltage for the renewable energy source entering the ride-through state; if the terminal voltage is greater than the threshold voltage, a corresponding prompt processing is performed by a first prompt section; otherwise, a corresponding prompt processing is performed by a second prompt section.

The first prompt section is configured to: compare the bus voltage with the threshold voltage; if the bus voltage is greater than the threshold voltage, output a first prompt information; if the bus voltage is not greater than the threshold voltage, output a second prompt information; herein the first prompt information is used for indicating that there is no risk of voltage instability caused by ride-through and switching, and the second prompt information is used for indicating that there is a risk of a voltage instability or a renewable energy source off-grid caused by continuous ride-through and non-recovery of the renewable energy source.

The second prompt section is configured to: compare the bus voltage with the threshold voltage; if the bus voltage is greater than the threshold voltage, output a third prompt information; if the bus voltage is not greater than the threshold voltage, output a fourth prompt information; herein the third prompt information is used for indicating that there is a risk of voltage and power oscillations or a risk of the renewable energy source off-grid caused by the renewable energy source repeatedly entering and exiting ride-through, and the fourth prompt information is used for indicating that there is a risk of voltage instability or the renewable energy source off-grid caused by continuous ride-through and non-recovery of the renewable energy source.

In some embodiments, the electrical model may be composed of: a distribution grid with distributed renewable energy source, a main grid and an equivalent voltage source; or an aggregate renewable energy source station, a main grid and an equivalent voltage source.

In some embodiments, the mathematical model may be expressed as follows.

$$I_P = SK_{P1}V_t + K_{P2}I_{P0} + SI_{Pset} ;$$

$$I_Q = SK_{Q1}(V_L - V_t) + SI_{Qset} .$$

Where, S represents a rated capacity of the renewable energy source, $I_P$ represents an active current during the ride-through of the renewable energy source, $I_Q$ represents a reactive current during the ride-through of the renewable energy source, $I_{P0}$ represents an active current before the renewable energy source enters the ride-through state, $K_{P1}$ represents a first control parameter of the active current during the ride-through of the renewable energy source, $K_{P2}$ represents a second control parameter of the active current during the ride-through of the renewable energy source, $I_{Pset}$ represents a bias parameter of the active current during the ride-through of the renewable energy source, $K_{Q1}$ represents a control parameter of the reactive current during the ride-through of the renewable energy source, $I_{Qset}$ represents a bias parameter of the reactive current during the ride-through of the renewable energy source, $V_L$ represents the threshold voltage for the renewable energy source entering the ride-through state, and $V_t$ represents the terminal voltage of the renewable energy source.

In some embodiments, a state transition logic of the state transition model may be as follows.

When a control mode of the renewable energy source at present is a normal state, if the terminal voltage of the renewable energy source is less than the threshold voltage, the control mode of the renewable energy source is transitioned from the normal state to the ride-through state.

When the control mode of the renewable energy source at present is the ride-through state, if the terminal voltage of the renewable energy source is greater than the threshold voltage and no ride-through recovery function is configured for the renewable energy source, the control mode of the renewable energy source is transitioned from the ride-through state to the normal state.

When the control mode of the renewable energy source at present is the ride-through state, if the terminal voltage of the renewable energy source is greater than the threshold voltage and the ride-through recovery function is configured for the renewable energy source, the control mode of the renewable energy source is transitioned from the ride-through state to a recovery state.

When the control mode of the renewable energy source at present is the recovery state, if the terminal voltage of the renewable energy source is greater than the threshold voltage and the active power of the renewable energy source is not less than an active power in the normal state, the control mode of the renewable energy source is transitioned from the recovery state to the normal state.

When the control mode of the renewable energy source at present is the recovery state, if the terminal voltage of the renewable energy source is less than the threshold voltage, the control mode of the renewable energy source is transitioned from the recovery state to the ride-through state.

The embodiment of the disclosure provides a computer-readable storage medium having stored thereon a computer program, the computer program is executed to perform the method of any of the foregoing aspects of the disclosure.

The embodiment of the disclosure provides an electronic device, including: a processor; and a memory for storing executable instructions by the processor; herein the processor is configured to read the executable instructions from the memory and execute the executable instructions to implement the method of any of the foregoing aspects of the disclosure.

The embodiment of the disclosure provides a computer program product, including computer programs or instructions that when executed on an electronic device, cause the electronic device to perform the method of any of the foregoing aspects of the disclosure.

The disclosure may be used for voltage stability analysis of power system with renewable energy source, and may indicate risk of voltage instability of power system under the action of renewable energy source control switching, including but not limited to a risk of voltage instability or the renewable energy source off-grid caused by continuous ride-through and non-recovery of the renewable energy source, a risk of voltage and power oscillations or a risk of the renewable energy source off-grid caused by the renewable energy source repeatedly entering/exiting ride-through, thereby providing guidance for power system planning, operation mode arrangement, stability control, etc., so as to solve the technical problem that the related art is unable to analyze the influence of ride-through and control switching of the renewable energy source on voltage stability.

BRIEF DESCRIPTION OF THE DRAWINGS

In order to explain the technical solutions of embodiments of the disclosure more clearly, the drawings used in the embodiments of the disclosure will be described below.

Exemplary embodiments of the disclosure may be understood more fully with reference to the following drawings:

FIG. 1 is a flowchart of a method of analyzing a power grid voltage stability considering renewable energy source control switching according to an embodiment of the disclosure;

FIG. 2 is a schematic diagram of an electrical model of power system with renewable energy source according to an embodiment of the disclosure;

FIG. 3 is a schematic diagram of a state transition model of renewable energy source control mode switching according to an embodiment of the disclosure;

FIG. 4 is a structural schematic diagram of a system of analyzing a power grid voltage stability considering renewable energy source control switching according to an embodiment of the disclosure; and

FIG. 5 is a structural schematic diagram of an electronic device according to an embodiment of the disclosure.

The drawings herein are incorporated in the Description and form a part of the Description, these drawings illustrate embodiments in accordance with the disclosure and are used to illustrate the technical solutions of the disclosure together with the Description.

DETAILED DESCRIPTION

Hereinafter, example embodiments according to the disclosure will be described in detail with reference to the accompanying drawings. Apparently, the described embodiments are part of the embodiments of the disclosure but not all of the embodiments of the disclosure, and it should be understood that the disclosure is not limited by the example embodiments described herein.

It should be noted that the relative arrangements of the components and operations, numerical expressions and values set forth in these embodiments do not limit the scope of the disclosure, unless otherwise specified.

As will be understood by those skilled in the art, the terms "first", "second" and the like in the embodiments of the disclosure are used to distinguish between different operations, devices or sections, etc., and do not represent any particular technical meaning or represent a necessary logical order between them.

It should also be understood that in the embodiments of the disclosure, "multiple" may refer to two or more, and "at least one" may refer to one, two or more.

It should also be understood that any of the components, data or structures mentioned in the embodiments of the disclosure may generally be understood as one or more without being explicitly defined or given to the contrary in the context.

In addition, the term "and/or" in the disclosure is an association relationship that describes associated objects, indicating that there are three relationships, for example, A and/or B, which means that there are three situations: A alone, A and B simultaneously, and B alone. In addition, the character "/" in the disclosure generally indicates that the related objects are a kind of "or" relationship herein.

It should also be understood that the description of the various embodiments in the disclosure emphasizes differences between the various embodiments, and identical or similar features thereof may be cross-referenced.

Furthermore, it should be understood that, for ease of description, the dimensions of the respective portions illustrated in the drawings are not drawn to actual scale.

The following description of at least one exemplary embodiment is purely illustrative and should not be considered as imposing any limitation on the disclosure and its application or usage.

Techniques, methods and devices known to those of ordinary skill in the art may not be discussed in detail, but the technologies, the methods and the devices should be regarded as part of the Description where appropriate.

It should be noted that similar reference numerals and letters in the following drawings represent similar items, and therefore, once an item is defined in one drawing, it does not need to be further discussed in subsequent drawings.

Among related technologies, due to the characteristics of low carbon, environmental protection and sustainable development of renewable energy source, the power generation of renewable energy in China has grown steadily in recent years, and the proportion of the renewable energy source in the power system has increased gradually, which indicates that renewable energy source power generation will become the main force of power supply in China in the future. Therefore, the static voltage stability margin of power system with renewable energy source is of great significance.

The technology at present may determine the static voltage stability margin of power system by analyzing the operation mode of power system with renewable energy source in detail, so as to assist relevant personnel in understanding the stability of large power grid.

The invention patent CN115940173B relates to a technology that may analyze the voltage stability of power system with renewable energy source. In the patent, in a renewable energy source multi-station sending-out system, under the condition that disturbance power of a certain station is greatly increased, the station is determined as a disturbance station, and power increase coefficients of other stations in the renewable energy source multi-station sending-out system is determined according to wind power prediction; the power steady-state limit of the disturbance station is determined according to the short-circuit capacity and impedance of each unit of the disturbance station and the power increase coefficients of other stations; the static voltage stability limit power of the renewable energy source multi-station sending-out system is determined according to the power steady-state limit of the disturbance station and the sending-out power of other stations; and a margin ratio index of the renewable energy source multi-station sending-out system is determined according to the static voltage stability limit power and the initial operation power of the renewable energy source multi-station sending-out system, and the static voltage stability of the renewable energy source multi-station sending-out system is determined according to the margin ratio index.

However, this technology only analyzes the static voltage stability margin of power system, and regards renewable energy source as a static constant power source. In actual operation, low voltage ride-through of renewable energy source is a common event. During such event, the power of the renewable energy source will fluctuate with the system voltage, and the control mode of the renewable energy source may be switched between different modes, such as ride-through control, normal control and the like. Therefore, the related art cannot analyze the influence of ride-through and control switching of the renewable energy source on voltage stability

The embodiments of the disclosure may be applied to electronic devices, such as communication terminals, computer systems, servers and the like, which may operate with numerous other general purpose or special purpose computing systems, environments or configurations. Examples of well-known communication terminals, computing systems, environments and/or configurations suitable for use with electronic devices (such as communication terminals, computer systems, servers and the like) include but not limited to: personal computer systems, server computer systems, thin clients, thick clients, handheld or laptop devices, microprocessor-based systems, set-top boxes, programmable consumer electronics, network personal computers, minicomputer systems, large computer systems and distributed cloud computing technology environments including any of the above systems, and so on.

Electronic devices (such as communication terminals, computer systems, servers and the like) may be described in the general context of computer system executable instructions (such as program modules) executed by the computer system. Generally, program modules may include routines, programs, object programs, components, logics, data structures, and so on, which perform specific tasks or implement specific abstract data types. The computer system/server may be implemented in a distributed cloud computing environment in which tasks are performed by remote processing devices linked through a communication network. In a distributed cloud computing environment, program modules may be located on a local or remote computing system storage medium that includes storage devices.

Terms involved in the disclosure:

Low voltage ride through (LVRT): also known as low voltage transition capability, it is defined as the ability of a small-scale power generation system to withstand a certain threshold of low voltage in power grid for a certain time without exiting operation.

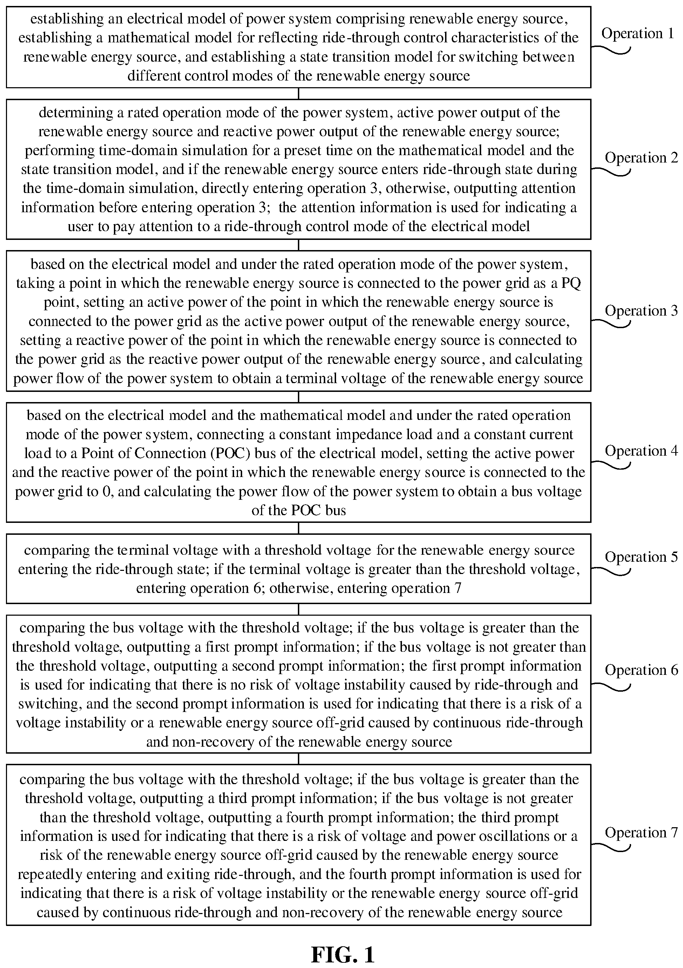

The disclosure proposes a method and system of analyzing a power grid voltage stability considering renewable energy source control switching. FIG. 1 is a flowchart of a method of analyzing a power grid voltage stability considering renewable energy source control switching according to an embodiment of the disclosure. As illustrated in FIG. 1, the method of analyzing a power grid voltage stability considering renewable energy source control switching includes the following operations.

Operation 1: an electrical model of power system including renewable energy source is established, a mathematical model for reflecting ride-through control characteristics of the renewable energy source is established, and a state transition model for switching between different control modes of the renewable energy source is established.

In some embodiments, the electrical model is composed of: a distribution grid with distributed renewable energy source, a main grid and an equivalent voltage source; or, an aggregate renewable energy source station, a main grid and an equivalent voltage source.

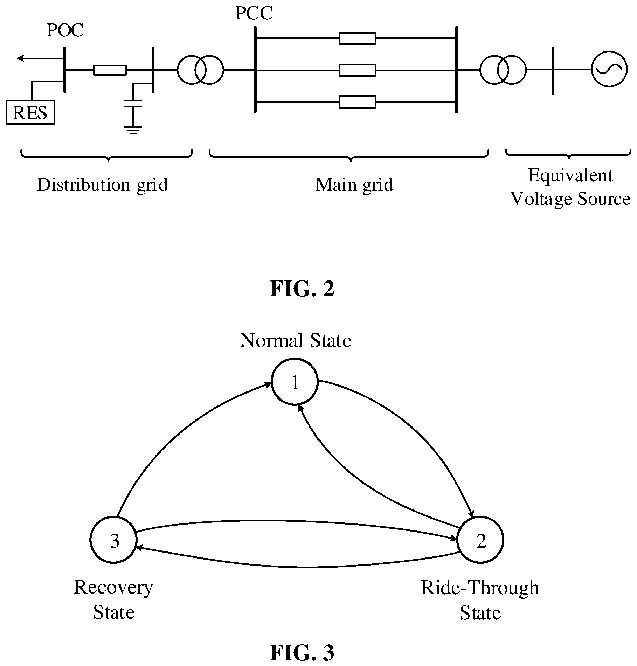

In an embodiment of the disclosure, an electrical model of power system with renewable energy source is established. FIG. 2 is a schematic diagram of an electrical model of power system with renewable energy source according to an embodiment of the disclosure, as illustrated in FIG. 2, *RES* represents a renewable energy source (an aggregate renewable energy source or a distributed renewable energy source), Point of Connection (POC) is the point in which the renewable energy source is connected to the power grid, Point of Common Coupling (PCC) is a common connection point to which an aggregate renewable energy source or the distribution grid with a distributed renewable energy source is connected.

In some embodiments, the mathematical model may be expressed as follows.

$$I_P = SK_{P1}V_t + K_{P2}I_{P0} + SI_{Pset} \ ;$$

$$I_Q = SK_{Q1}(V_L - V_t) + SI_{Qset} \ .$$

Where, S represents a rated capacity of the renewable energy source, $I_P$ represents an active current during the ride-through of the renewable energy source, $I_Q$ represents a reactive current during the ride-through of the renewable energy source, $I_{P0}$ represents an active current before the renewable energy source enters the ride-through state, $K_{P1}$ represents a first control parameter of the active current during the ride-through of the renewable energy source, $K_{P2}$ represents a second control parameter of the active current during the ride-through of the renewable energy source, $I_{Pset}$ represents a bias parameter of the active current during the ride-through of the renewable energy source, $K_{Q1}$ represents a control parameter of the reactive current during the ride-through of the renewable energy source, $I_{Qset}$ represents a bias parameter of the reactive current during the ride-through of the renewable energy source, $V_L$ represents the threshold voltage for the renewable energy source entering the ride-through state, and $V_t$ represents the terminal voltage of the renewable energy source.

In an embodiment of the disclosure, a mathematical model which may reflect the low voltage ride-through control characteristics of the renewable energy source is established. Following formulas (1) to (2) provide an example of the mathematical model. Where, S represents a rated capacity of the renewable energy source, $I_P$ represents an active current during the ride-through of the renewable energy source, $I_Q$ represents a reactive current during the ride-through of the renewable energy source, $I_{P0}$ represents an active current before the renewable energy source enters the ride-through state, $K_{P1}$ represents a first control parameter of the active current during the ride-through of the renewable energy source, $K_{P2}$ represents a second control parameter of the active current during the ride-through of the renewable energy source, $I_{Pset}$ represents a bias parameter of the active current during the ride-through of the renewable energy source, $K_{Q1}$

represents a control parameter of the reactive current during the ride-through of the renewable energy source, $I_{Qset}$ represents a bias parameter of the reactive current during the ride-through of the renewable energy source, $V_L$ represents the threshold voltage for the renewable energy source entering the ride-through state, and $V_t$ represents the terminal voltage of the renewable energy source.

$$I_P = SK_{P1}V_t + K_{P2}I_{P0} + SI_{Pset} \qquad (1);$$

$$I_Q = SK_{Q1}(V_L - V_t) + SI_{Qset} \qquad (2).$$

In some embodiments, a state transition logic of the state transition model is as follows: when a control mode of the renewable energy source at present is a normal state, if the terminal voltage of the renewable energy source is less than the threshold voltage, the control mode of the renewable energy source is transitioned from the normal state to the ride-through state; when the control mode of the renewable energy source at present is the ride-through state, if the terminal voltage of the renewable energy source is greater than the threshold voltage and no ride-through recovery function is configured for the renewable energy source, the control mode of the renewable energy source is transitioned from the ride-through state to the normal state; when the control mode of the renewable energy source at present is the ride-through state, if the terminal voltage of the renewable energy source is greater than the threshold voltage and the ride-through recovery function is configured for the renewable energy source, the control mode of the renewable energy source is transitioned from the ride-through state to a recovery state; when the control mode of the renewable energy source at present is the recovery state, if the terminal voltage of the renewable energy source is greater than the threshold voltage and the active power of the renewable energy source is not less than an active power in the normal state, the control mode of the renewable energy source is transitioned from the recovery state to the normal state; and when the control mode of the renewable energy source at present is the recovery state, if the terminal voltage of the renewable energy source is less than the threshold voltage, the control mode of the renewable energy source is transitioned from the recovery state to the ride-through state.

In an embodiment of the disclosure, it is necessary to establish a state transition model for switching between different control modes of the renewable energy source. FIG. 3 is a schematic diagram of a state transition model of renewable energy source control mode switching according to an embodiment of the disclosure. As illustrated in FIG. 3, the state transition logic of the state transition model is as follows.

The control mode of the renewable energy source at present is a normal state, if $V_t$ is less than $V_L$, the control mode of the renewable energy source is transitioned from the normal state ① to the ride-through state ②, that is, from ① to ②.

The control mode of the renewable energy source at present is the ride-through state, if $V_t$ is greater than $V_L$ and no ride-through recovery function is configured for the renewable energy source, the control mode of the renewable energy source is transitioned from the ride-through state ② to the normal state ①, that is, from ② to ①.

The control mode of the renewable energy source at present is the ride-through state, if $V_t$ is greater than $V_L$ and the ride-through recovery function is configured for the renewable energy source, the control mode of the renewable energy source is transitioned from the ride-through state ② to a recovery state ③, that is, from ② to ③.

The control mode of the renewable energy source at present is the recovery state, if $V_t$ is greater than $V_L$ and the active power of the renewable energy source is not less than an active power in the normal state, the control mode of the renewable energy source is transitioned from the recovery state ③ to the normal state ①, that is, from ③ to ①.

The control mode of the renewable energy source at present is the recovery state, if $V_t$ is less than $V_L$, the control mode of the renewable energy source is transitioned from the recovery state ③ to the ride-through ②, that is, from ③ to ②.

Operation 2: rated operation mode of the power system, active power output of the renewable energy source and reactive power output of the renewable energy source are determined; time-domain simulation for a preset time is performed on the mathematical model and the state transition model, and if the renewable energy source enters ride-through state during the time-domain simulation, operation 3 is directly entered, otherwise, attention information is output before entering operation 3; herein the attention information is used for indicating a user to pay attention to a ride-through control mode of the electrical model.

In an embodiment of the disclosure, it is necessary to determine rated operation mode of the power system, active power output $PR$ of the renewable energy source and reactive power output $QR$ of the renewable energy source. Moreover, using power system simulation software or mathematical calculation software, time-domain simulation on the established mathematical model and the state transition model is performed for 5 seconds. The voltage of the equivalent voltage source is set to fall from 1.0 $p.u.$ to 0.7 $p.u$ at 1.0 second and remain unchanged, to rise again to 1.0 $p.u.$ at 1.1 second. If the renewable energy source has entered the ride-through state during the simulation process, operation 3 is directly entered; otherwise, the attention information of "Please pay attention to the ride-through control configuration mode of the renewable energy source model" is output before entering operation 3.

Operation 3: based on the electrical model and under the rated operation mode of the power system, a point in which the renewable energy source is connected to the power grid is taken as a PQ point, an active power of the point in which the renewable energy source is connected to the power grid is set as the active power output of the renewable energy source, a reactive power of the point in which the renewable energy source is connected to the power grid is set as the reactive power output of the renewable energy source, and power flow of the power system is calculated to obtain a terminal voltage of the renewable energy source.

In an embodiment of the disclosure, based on the electrical model and under the rated operation mode of the power system, a point (corresponding to POC point in FIG. 2) in which the renewable energy source is connected to the power grid is taken as a PQ point, and active power and reactive power of the point in which the renewable energy source is connected to the power grid are the active power output $PR$ of the renewable energy source and the reactive power output $QR$ of the renewable energy source respectively, and power flow of the power system is calculated to obtain a terminal voltage $V_{t1}$ of the renewable energy source.

Operation 4: based on the electrical model and the mathematical model and under the rated operation mode of the power system, a constant impedance load and a constant current load are connected to a POC bus of the electrical model, the active power and the reactive power of the point in which the renewable energy source is connected to the power grid are set to 0, and the power flow of the power system is calculated to obtain a bus voltage of the POC bus.

In an embodiment of the disclosure, based on the electrical model and the mathematical model and under the rated operation mode of the power system, a constant impedance load and a constant current load are connected to a POC bus of the electrical model, and the power flow of the power system is calculated. When calculating the power flow, the active power output of the renewable energy source and the reactive power output of the renewable energy source are set to 0, the active load power $P_{CZeq}$ of the constant impedance load is set to $P_{CZeq} = -SK_{P1}$, the reactive load power $Q_{CZeq}$ of the constant impedance load is set to $Q_{CZeq} = SK_{Q1}$, the active load power of the constant current load $P_{Cleq}$ is set to $P_{Cleq} = -K_{P2}I_{P0} - SI_{Pset}$, and the reactive load power $Q_{Cleq}$ of the constant current load is set to $Q_{Cleq} = -SK_{Q1}V_L - SI_{Qset}$. After the calculation is completed, the bus voltage of the $POC$ bus obtained from the power flow calculation is recorded as $V_{t2}$.

Operation 5: the terminal voltage is compared with a threshold voltage for the renewable energy source entering the ride-through state; if the terminal voltage is greater than the threshold voltage, operation 6 is entered; otherwise, operation 7 is entered.

Operation 6: the bus voltage is compared with the threshold voltage; if the bus voltage is greater than the threshold voltage, a first prompt information is output; if the bus voltage is not greater than the threshold voltage, a second prompt information is output; herein the first prompt information is used for indicating that there is no risk of voltage instability caused by ride-through and switching, and the second prompt information is used for indicating that there is a risk of a voltage instability or a renewable energy source off-grid caused by continuous ride-through and non-recovery of the renewable energy source.

Operation 7: the bus voltage is compared with the threshold voltage; if the bus voltage is greater than the threshold voltage, a third prompt information is output; if the bus voltage is not greater than the threshold voltage, a fourth prompt information is output; herein the third prompt information is used for indicating that there is a risk of voltage and power oscillations or a risk of the renewable energy source off-grid caused by the renewable energy source repeatedly entering and exiting ride-through, and the fourth prompt information is used for indicating that there is a risk of voltage instability or the renewable energy source off-grid caused by continuous ride-through and non-recovery of the renewable energy source.

In an embodiment of the disclosure, $V_{t1}$ is compared with $V_L$. If $V_{t1}$ is greater than $V_L$, operation 6 is entered; otherwise, operation 7 is entered. Operation 6: $V_{t2}$ is compared with $V_L$. If $V_{t2}$ is greater than $V_L$, the prompt information "There is no significant risk of voltage instability caused by ride-through and switching" is output, and the analysis ends. Otherwise, the prompt information of "There is a risk of low voltage instability or the renewable energy source off-grid caused by continuous low voltage ride-through and non-recovery of the renewable energy source", and the analysis ends.

Operation 7: $V_{t2}$ is compared with $V_L$. If $V_{t2}$ is greater than $V_L$, the prompt information of "there is a risk of voltage and power oscillations or a risk of the renewable energy source off-grid caused by the renewable energy source repeatedly entering and exiting low voltage ride-through" is output, and the analysis ends. Otherwise, the prompt information of "There is a risk of low voltage instability or the renewable energy source off-grid caused by continuous low voltage ride-through and non-recovery of the renewable energy source", and the analysis ends.

To sum up, the disclosure may be used for voltage stability analysis of power system with renewable energy source, and may indicate risk of voltage instability of power system under the action of renewable energy source control switching, including but not limited to a risk of voltage instability or the renewable energy source off-grid caused by continuous ride-through and non-recovery of the renewable energy source, a risk of voltage and power oscillations or a risk of the renewable energy source off-grid caused by the renewable energy source repeatedly entering/exiting ride-through, thereby providing guidance for power system planning, operation mode arrangement, stability control, etc., so as to solve the technical problem that the related art is unable to analyze the influence of ride-through and control switching of the renewable energy source on voltage stability.

As will be understood by those skilled in the art, in methods of detailed description mentioned above, the order of writing of each operation does not mean a strict order of execution and does not constitute any limitation on the implementation process, and the specific order of execution of each operation should be determined according to its function and possible inherent logic.

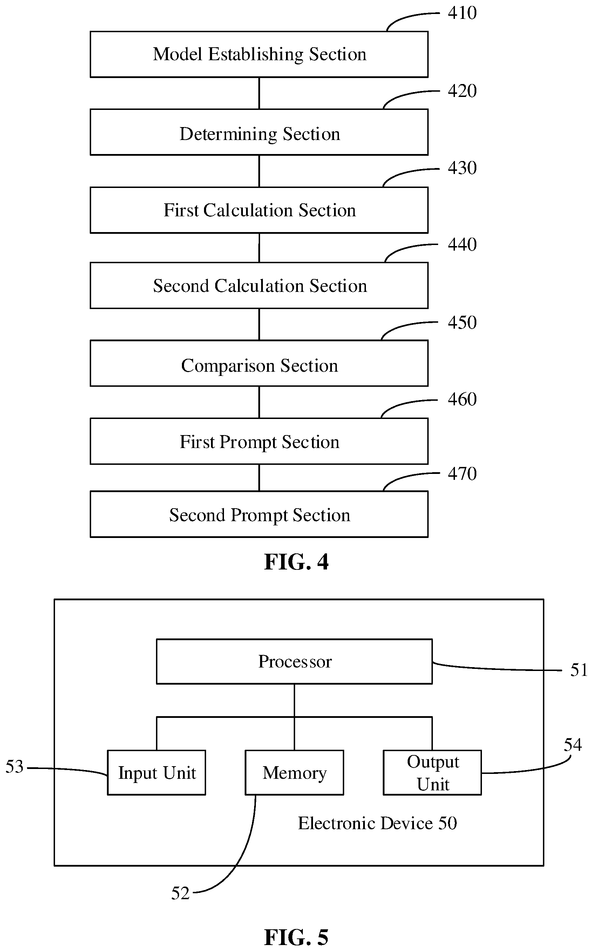

FIG. 4 is a structural schematic diagram of a system of analyzing a power grid voltage stability considering renewable energy source control switching according to an embodiment of the disclosure. As illustrated in FIG. 4, the system includes: a model establishing section 410, a determining section 420, a first calculation section 430, a second calculation section 440, a comparison section 450, a first prompt section 460 and a second prompt section 470.

The model establishing section 410 is configured to establish an electrical model of power system including renewable energy source, establish a mathematical model for reflecting ride-through control characteristics of the renewable energy source, and establish a state transition model for switching between different control modes of the renewable energy source.

The determining section 420 is configured to: determine rated operation mode of the power system, active power output of the renewable energy source and reactive power output of the renewable energy source; perform time-domain simulation for a preset time on the mathematical model and the state transition model, and if the renewable energy source enters ride-through state during the time-domain simulation, a computational processing is directly performed by a first calculation section, otherwise, attention information is output before performing a computational processing by the first calculation section; herein the attention information is used for indicating a user to pay attention to a ride-through control mode of the electrical model.

The first calculation section 430 is configured to, based on the electrical model and under the rated operation mode of the power system, take a point in which the renewable energy source is connected to the power grid as a PQ point, set an active power of the point in which the renewable energy source is connected to the power grid as the active power output of the renewable energy source, set a reactive power of the point in which the renewable energy source is connected to the power grid as the reactive power output of the renewable energy source, and calculate power flow of the power system to obtain a terminal voltage of the renewable energy source.

The second calculation section 440 is configured to, based on the electrical model and the mathematical model and under the rated operation mode of the power system, connect a constant impedance load and a constant current load to a POC bus of the electrical model, set the active power and the reactive power of the point in which the renewable energy source is connected to the power grid to 0, and calculate the power flow of the power system to obtain a bus voltage of the POC bus.

The comparison section 450 is configured to compare the terminal voltage with a threshold voltage for the renewable energy source entering the ride-through state; if the terminal voltage is greater than the threshold voltage, a corresponding prompt processing is performed by a first prompt section; otherwise, a corresponding prompt processing is performed by a second prompt section.

The first prompt section 460 is configured to: compare the bus voltage with the threshold voltage; if the bus voltage is greater than the threshold voltage, output a first prompt information; if the bus voltage is not greater than the threshold voltage, output a second prompt information; herein the first prompt information is used for indicating that there is no risk of voltage instability caused by ride-through and switching, and the second prompt information is used for indicating that there is a risk of a voltage instability or a renewable energy source off-grid caused by continuous ride-through and non-recovery of the renewable energy source.

The second prompt section 470 is configured to: compare the bus voltage with the threshold voltage; if the bus voltage is greater than the threshold voltage, output a third prompt information; if the bus voltage is not greater than the threshold voltage, output a fourth prompt information; herein the third prompt information is used for indicating that there is a risk of voltage and power oscillations or a risk of the renewable energy source off-grid caused by the renewable energy source repeatedly entering and exiting ride-through, and the fourth prompt information is used for indicating that there is a risk of voltage instability or the renewable energy source off-grid caused by continuous ride-through and non-recovery of the renewable energy source.

In some embodiments, the electrical model may be composed of: a distribution grid with distributed renewable energy source, a main grid and an equivalent voltage source; or an aggregate renewable energy source station, a main grid and an equivalent voltage source.

In some embodiments, the mathematical model may be expressed as follows.

$$I_P = S K_{P1} V_t + K_{P2} I_{P0} + S I_{Pset} ,$$

$$I_Q = SK_{Q1}(V_L - V_t) + SI_{Qset}$$

Where, S represents a rated capacity of the renewable energy source, $I_P$ represents an active current during the ride-through of the renewable energy source, $I_Q$ represents a reactive current during the ride-through of the renewable energy source, $I_{P0}$ represents an active current before the renewable energy source enters the ride-through state, $K_{P1}$ represents a first control parameter of the active current during the ride-through of the renewable energy source, $K_{P2}$ represents a second control parameter of the active current during the ride-through of the renewable energy source, $I_{Pset}$ represents a bias parameter of the active current during the ride-through of the renewable energy source, $K_{Q1}$ represents a control parameter of the reactive current during the ride-through of the renewable energy source, $I_{Qset}$ represents a bias parameter of the reactive current during the ride-through of the renewable energy source, $V_L$ represents the threshold voltage for the renewable energy source entering the ride-through state, and $V_t$ represents the terminal voltage of the renewable energy source.

In some embodiments, a state transition logic of the state transition model may be as follows.

When a control mode of the renewable energy source at present is a normal state, if the terminal voltage of the renewable energy source is less than the threshold voltage, the control mode of the renewable energy source is transitioned from the normal state to the ride-through state.

When the control mode of the renewable energy source at present is the ride-through state, if the terminal voltage of the renewable energy source is greater than the threshold voltage and no ride-through recovery function is configured for the renewable energy source, the control mode of the renewable energy source is transitioned from the ride-through state to the normal state.

When the control mode of the renewable energy source at present is the ride-through state, if the terminal voltage of the renewable energy source is greater than the threshold voltage and the ride-through recovery function is configured for the renewable energy source, the control mode of the renewable energy source is transitioned from the ride-through state to a recovery state.

When the control mode of the renewable energy source at present is the recovery state, if the terminal voltage of the renewable energy source is greater than the threshold voltage and the active power of the renewable energy source is not less than an active power in the normal state, the control mode of the renewable energy source is transitioned from the recovery state to the normal state.

When the control mode of the renewable energy source at present is the recovery state, if the terminal voltage of the renewable energy source is less than the threshold voltage, the control mode of the renewable energy source is transitioned from the recovery state to the ride-through state.

The system of analyzing a power grid voltage stability considering renewable energy source control switching in an embodiment of the disclosure corresponds to the method of analyzing a power grid voltage stability considering renewable energy source control switching in another embodiment of the disclosure.

FIG. 5 is a structural schematic diagram of an electronic device according to an embodiment of the disclosure. As illustrated in FIG. 5, the electronic device 50 includes one or more processors 51 and a memory 52.

The processor 51 may be a central processing unit (CPU) or other form of processing unit with data processing capability and/or instruction execution capability, and may control other components in the electronic device to perform desired functions.

The memory 52 may include one or more computer program products which may include various forms of computer-readable storage media, such as volatile memory and/or non-volatile memory. The volatile memory may include, for example, random-access memory (RAM) and/or cache or the like. The non-volatile memory may include, for example, read-only memory (ROM), hard disk, flash memory, etc. One or more computer program instructions may be stored on the computer-readable storage medium, and the processor 51 may execute the program instructions to implement the methods of software programs in various embodiments of the disclosure described above and/or other desired functions. In one example, the electronic device may also include an input unit 53 and an output unit 54 which are interconnected by a bus system and/or other form of connection mechanism (not shown).

In addition, the input unit 53 may also include, for example, a keyboard, a mouse and the like.

The output unit 54 may output various information to the outside. The output unit 54 may include, for example, a display, a speaker, a printer, as well as a communication network and remote output devices to which it is connected, and so on.

Of course, for the sake of simplicity, some of the components related to the disclosure in the electronic device are illustrated in FIG. 5 and components such as a bus, an input/output interface and the like are omitted. In addition, the electronic device may also include any other suitable components depending on the specific application.

In addition to the methods and devices described above, an embodiment of the disclosure may be a computer program product that includes computer program instructions that when executed by a processor, cause the processor to perform operations in the methods according to various embodiments of the disclosure described in the above-mentioned "Exemplary methods" section of this description.

The computer program product may write program codes for performing the operations in embodiments of the disclosure in any combination of one or more programming languages which, includes object-oriented programming languages (such as Java, C++, etc.), and conventional procedural programming languages (such as the "C" language or similar programming languages). The program code may be executed entirely on the user computing device, executed partly on the user computing device, executed as a separate software package, executed partly on the user computing device and partly on the remote computing device, or executed entirely on the remote computing device or server.

In addition, an embodiment of the disclosure may also be a computer-readable storage medium having stored thereon a computer program instructions that, when executed by a processor, cause the processor to perform operations in the methods according to various embodiments of the disclosure described in the above-mentioned "Exemplary methods" section of this description.

The computer-readable storage medium may employ any combination of one or more readable media. The readable medium may be a readable signal medium or a readable storage medium. The readable storage medium may include, for example, but not limited to, systems, systems or devices of electrical, magnetic, optical, electromagnetic, infrared, or semiconductor, or any combination of the above. More specific examples (non-exhaustive list) of readable storage media include: electrical connections with one or more conductors, portable disks, hard disks, random access memory (RAM), read only memory (ROM), erasable programmable read only memory (EPROM or flash memory), optical fiber, portable compact disk read-only memory (CD-ROM), optical memory device, magnetic memory device, or any suitable combination of the above.

The basic principle of disclosure has been described above in connection with specific embodiments, but it should be noted that the advantages, benefits, effects, etc. mentioned in the disclosure are examples and not limitations, and it cannot be assumed that these advantages, benefits, effects, etc. are essential for each embodiment of the disclosure. In addition, the above-disclosed specific details are for the purpose of example and ease of understanding and are not limiting, and the above details are not limiting to the fact that the disclosure must be implemented using the specific details mentioned above.

Each embodiment in the description is described in a progressive manner and each embodiment focuses on its differences from other embodiments. The same or similar parts between various embodiments may be cross-referenced. As far as the system embodiment is concerned, since it basically corresponds to the method embodiment, the description of which is relatively simple, and the relevant parts may be referred to the partial description of the method embodiment.

The devices, systems, apparatus, block diagrams of systems involved in the disclosure are illustrative examples and are not intended to require or imply that they must be connected, arranged, or configured in the manner shown in the block diagrams. As will be recognized by those skilled in the art, these devices, systems, apparatus, systems may be connected, arranged, configured in any manner. The words such as "including," "containing," "with" etc. are open-ended words that mean "include but not limited to" and may be used interchangeably with each other. The words "or" and "and" as used herein refer to the words "and/or" and may be used interchangeably with each other unless the context expressly indicates otherwise. The word "such as" as used herein refers to the phrase "such as but not limited to" and may be used interchangeably with each other.

The method and the system of the disclosure may be implemented in many ways. For example, the method and the system of the disclosure may be implemented by software, hardware, firmware, or any combination of software, hardware and firmware. The above sequence of operations for the method is for illustration purposes and the operations of the method of the disclosure are not limited to the sequence specifically described above unless otherwise specifically stated. Furthermore, in some embodiments, the disclosure may also be implemented as programs recorded in a recording medium, the programs include machine-readable instructions for implementing the method according to the disclosure. Therefore, disclosure also covers a recording medium storing a program for executing the method according to the disclosure.

It should also be noted that in systems, devices and methods of the disclosure, components or operations may be disassembled and/or reassembled. These disassembling and/or reassembling should be regarded as the equivalent schemes of the disclosure. The above description of the disclosed aspects is provided to enable any skilled in the art to make or use the disclosure. Various modifications to these aspects will be apparent to those skilled in the art and the general principles defined herein may be applied to other aspects without departing from the scope of the disclosure. Therefore, the disclosure is not intended to be limited to the aspects shown herein but to the widest extent consistent with the principles and novel features disclosed herein.

The above description has been given for purposes of illustration and description. Furthermore, this description is not intended to limit embodiments of the disclosure to the form disclosed herein. Although multiple example aspects and embodiments have been discussed above, those skilled in the art will recognize certain variations, modifications, changes, additions and sub-combinations thereof.

## Industrial applicability

The embodiment of the disclosure provides a method and system of analyzing a power grid voltage stability considering renewable energy source control switching, an electronic device, a storage medium and a computer program product. The method of analyzing a power grid voltage stability includes the following operations. Operation 1: an electrical model of power system including renewable energy source is established, a mathematical model for reflecting ride-through control characteristics of the renewable energy source is established, and a state transition model for switching between different control modes of the renewable energy source is established. Operation 2: rated operation mode of the power system, active power output of the renewable energy source and reactive power output of the renewable energy source are determined; time-domain simulation for a preset time is performed on the mathematical model and the state transition model, and if the renewable energy source enters ride-through state during the time-domain simulation, operation 3 is directly entered, otherwise, attention information is output before entering operation 3; herein the attention information is used for indicating a user to pay attention to a ride-through control mode of the electrical model. Operation 3: based on the electrical model and under the rated operation mode of the power system, a point in which the renewable energy source is connected to the power grid is taken as a PQ point, an active power of the point in which the renewable energy source is connected to the power grid is set as the active power output of the renewable energy source, a reactive power of the point in which the renewable energy source is connected to the power grid is set as the reactive power output of the renewable energy source, and power flow of the power system is calculated to obtain a terminal voltage of the renewable energy source. Operation 4: based on the electrical model and the mathematical model and under the rated operation mode of the power system, a constant impedance load and a constant current load are connected to a POC bus of the electrical model, the active power and the reactive power of the point in which the renewable energy source is connected to the power grid are set to 0, and the power flow of the power system is calculated to obtain a bus voltage of the POC bus. Operation 5: the terminal voltage is compared with a threshold voltage for the renewable energy source entering the ride-through state; if the terminal voltage is greater than the threshold voltage, operation 6 is entered; otherwise, operation 7 is entered. Operation 6: the bus voltage is compared with the threshold voltage; if the bus voltage is greater than the threshold voltage, a first prompt information is output; if the bus voltage is not greater than the threshold voltage, a second prompt information is output; herein the first prompt information is used for indicating that there is no risk of voltage instability caused by ride-through and switching, and the second prompt information is used for indicating that there is a risk of a voltage instability or a renewable energy source off-grid caused by continuous ride-through and non-recovery of the renewable energy source. Operation 7: the bus voltage is compared with the threshold voltage; if the bus voltage is greater than the threshold voltage, a third prompt information is output; if the bus voltage is not greater than the threshold voltage, a fourth prompt information is output; herein the third prompt information is used for indicating that there is a risk of voltage and power oscillations or a risk of the renewable energy source off-grid caused by the renewable energy source repeatedly entering and exiting ride-through, and the fourth prompt information is used for indicating that there is a risk of voltage instability or the renewable energy source off-grid caused by continuous ride-through and non-recovery of the renewable energy source. The above solution may be used for voltage stability analysis of power system with renewable energy source, and may indicate risk of voltage instability of power system under the action of renewable energy source control switching, including but not limited to a risk of voltage instability or the renewable energy source off-grid caused by continuous ride-through and non-recovery of the renewable energy source, a risk of voltage and power oscillations or a risk of the renewable energy source off-grid caused by the renewable energy source repeatedly entering/exiting ride-through, thereby providing guidance for power system planning, operation mode arrangement, stability control, etc., so as to solve the technical problem that the related art is unable to analyze the influence of ride-through and control switching of the renewable energy source on voltage stability.

## Claims

1.  A method of analyzing a power grid voltage stability considering renewable energy source control switching, comprising:

    operation 1: establishing an electrical model of power system comprising renewable energy source, establishing a mathematical model for reflecting ride-through control characteristics of the renewable energy source, and establishing a state transition model for switching between different control modes of the renewable energy source;
    operation 2: determining a rated operation mode of the power system, active power output of the renewable energy source and reactive power output of the renewable energy source; performing time-domain simulation for a preset time on the mathematical model and the state transition model, and if the renewable energy source enters ride-through state during the time-domain simulation, directly entering operation 3, otherwise, outputting attention information before entering operation 3; wherein the attention information is used for indicating a user to pay attention to a ride-through control mode of the electrical model;

operation 3: based on the electrical model and under the rated operation mode of the power system, taking a point in which the renewable energy source is connected to the power grid as a PQ point, setting an active power of the point in which the renewable energy source is connected to the power grid as the active power output of the renewable energy source, setting a reactive power of the point in which the renewable energy source is connected to the power grid as the reactive power output of the renewable energy source, and calculating power flow of the power system to obtain a terminal voltage of the renewable energy source;

operation 4: based on the electrical model and the mathematical model and under the rated operation mode of the power system, connecting a constant impedance load and a constant current load to a Point of Connection (POC) bus of the electrical model, setting the active power and the reactive power of the point in which the renewable energy source is connected to the power grid to 0, and calculating the power flow of the power system to obtain a bus voltage of the POC bus;

operation 5: comparing the terminal voltage with a threshold voltage for the renewable energy source entering the ride-through state; if the terminal voltage is greater than the threshold voltage, entering operation 6; otherwise, entering operation 7;

operation 6: comparing the bus voltage with the threshold voltage; if the bus voltage is greater than the threshold voltage, outputting a first prompt information; if the bus voltage is not greater than the threshold voltage, outputting a second prompt information; wherein the first prompt information is used for indicating that there is no risk of voltage instability caused by ride-through and switching, and the second prompt information is used for indicating that there is a risk of a voltage instability or a renewable energy source off-grid caused by continuous ride-through and non-recovery of the renewable energy source; and

operation 7: comparing the bus voltage with the threshold voltage; if the bus voltage is greater than the threshold voltage, outputting a third prompt information; if the bus voltage is not greater than the threshold voltage, outputting a fourth prompt information; wherein the third prompt information is used for indicating that there is a risk of voltage and power oscillations or a risk of the renewable energy source off-grid caused by the renewable energy source repeatedly entering and exiting ride-through, and the fourth prompt information is used for indicating that there is a risk of voltage instability or the renewable energy source off-grid caused by continuous ride-through and non-recovery of the renewable energy source.

2. The method of claim 1, wherein the electrical model is composed of: a distribution grid with distributed renewable energy source, a main grid and an equivalent voltage source; or an aggregate renewable energy source station, a main grid and an equivalent voltage source.

3. The method of claim 1, wherein the mathematical model is expressed as follows:

$$I_P = S K_{P1} V_t + K_{P2} I_{P0} + S I_{Pset} \,;$$

$$I_Q = S K_{Q1} (V_L - V_t) + S I_{Qset} \,;$$

where, S represents a rated capacity of the renewable energy source, $I_P$ represents an active current during the ride-through of the renewable energy source, $I_Q$ represents a reactive current during the ride-through of the renewable energy source, $I_{P0}$ represents an active current before the renewable energy source enters the ride-through state, $K_{P1}$ represents a first control parameter of the active current during the ride-through of the renewable energy source, $K_{P2}$ represents a second control parameter of the active current during the ride-through of the renewable energy source, $I_{Pset}$ represents a bias parameter of the active current during the ride-through of the renewable energy source, $K_{Q1}$ represents a control parameter of the reactive current during the ride-through of the renewable energy source, $I_{Qset}$ represents a bias parameter of the reactive current during the ride-through of the renewable energy source, $V_L$ represents the threshold voltage for the renewable energy source entering the ride-through state, and $V_t$ represents the terminal voltage of the renewable energy source.

4. The method of claim 1, wherein a state transition logic of the state transition model is as follows:

when a control mode of the renewable energy source at present is a normal state, if the terminal voltage of the renewable energy source is less than the threshold voltage, the control mode of the renewable energy source is transitioned from the normal state to the ride-through state;

when the control mode of the renewable energy source at present is the ride-through state, if the terminal voltage of the renewable energy source is greater than the threshold voltage and no ride-through recovery function is configured for the renewable energy source, the control mode of the renewable energy source is transitioned from the ride-through state to the normal state;

when the control mode of the renewable energy source at present is the ride-through state, if the terminal voltage of the renewable energy source is greater than the threshold voltage and the ride-through recovery function is configured for the renewable energy source, the control mode of the renewable energy source is transitioned from the ride-through state to a recovery state;

when the control mode of the renewable energy source at present is the recovery state, if the terminal voltage of the renewable energy source is greater than the threshold voltage and the active power of the renewable energy source is not less than an active power in the normal state, the control mode of the renewable energy source is transitioned from the recovery state to the normal state; and

when the control mode of the renewable energy source at present is the recovery state, if the terminal voltage of the renewable energy source is less than the threshold voltage, the control mode of the renewable energy source is transitioned from the recovery state to the ride-through state.

5. A system of analyzing a power grid voltage stability considering renewable energy source control switching, comprising:

a model establishing section, configured to establish an electrical model of power system comprising renewable energy source, establish a mathematical model for reflecting ride-through control characteristics of the renewable energy source, and establish a state transition model for switching between different control modes of the renewable energy source;

a determining section, configured to: determine a rated operation mode of the power system, active power output of the renewable energy source and reactive power output of the renewable energy source; perform time-domain simulation for a preset time on the mathematical model and the state transition model, and if the renewable energy source enters ride-through state during the time-domain simulation, a computational processing is directly performed by a first calculation section, otherwise, attention information is output before performing a computational processing by a first calculation section; wherein the attention information is used for indicating a user to pay attention to a ride-through control mode of the electrical model;

the first calculation section, configured to, based on the electrical model and under the rated operation mode of the power system, take a point in which the renewable energy source is connected to the power grid as a PQ point, set an active power of the point in which the renewable energy source is connected to the power grid as the active power output of the renewable energy source, set a reactive power of the point in which the renewable energy source is connected to the power grid as the reactive power output of the renewable energy source, and calculate power flow of the power system to obtain a terminal voltage of the renewable energy source;

a second calculation section, configured to, based on the electrical model and the mathematical model and under the rated operation mode of the power system, connect a constant impedance load and a constant current load to a Point of Connection (POC) bus of the electrical model, set the active power and the reactive power of the point in which the renewable energy source is connected to the power grid to 0, and calculate the power flow of the power system to obtain a bus voltage of the POC bus;

a comparison section, configured to compare the terminal voltage with a threshold voltage for the renewable energy source entering the ride-through state; if the terminal voltage is greater than the threshold voltage, a corresponding prompt processing is performed by a first prompt section; otherwise, a corresponding prompt processing is performed by a second prompt section;

the first prompt section, configured to: compare the bus voltage with the threshold voltage; if the bus voltage is greater than the threshold voltage, output a first prompt information; if the bus voltage is not greater than the threshold voltage, output a second prompt information; wherein the first prompt information is used for indicating that there is no risk of voltage instability caused by ride-through and switching, and the second prompt information is used for indicating that there is a risk of a voltage instability or a renewable energy source off-grid caused by continuous ride-through and non-recovery of the renewable energy source; and

the second prompt section, configured to compare the bus voltage with the threshold voltage; if the bus voltage is greater than the threshold voltage, output a third prompt information; if the bus voltage is not greater than the threshold voltage, output a fourth prompt information; wherein the third prompt information is used for indicating that there is a risk of voltage and power oscillations or a risk of the renewable energy source off-grid caused by the renewable energy source repeatedly entering and exiting ride-through, and the fourth prompt information is used for indicating that there is a risk of voltage instability or the renewable energy source off-grid caused by continuous ride-through and non-recovery of the renewable energy source.

6. The system of claim 5, wherein the electrical model is composed of: a distribution grid with distributed renewable energy source, a main grid and an equivalent voltage source; or an aggregate renewable energy source station, a main grid and an equivalent voltage source.

7. The system of claim 5, wherein the mathematical model is expressed as follows:

$$I_P = SK_{P1}V_t + K_{P2}I_{P0} + SI_{Pset} \text{ ;}$$

$$I_Q = SK_{Q1}(V_L - V_t) + SI_{Qset} \text{ ;}$$

where, S represents a rated capacity of the renewable energy source, $I_P$ represents an active current during the ride-through of the renewable energy source, $I_Q$ represents a reactive current during the ride-through of the renewable energy source, $I_{P0}$ represents an active current before the renewable energy source enters the ride-through state, $K_{P1}$ represents a first control parameter of the active current during the ride-through of the renewable energy source, $K_{P2}$ represents a second control parameter of the active current during the ride-through of the renewable energy source, $I_{Pset}$ represents a bias parameter of the active current during the ride-through of the renewable energy source, $K_{Q1}$ represents a control parameter of the reactive current during the ride-through of the renewable energy source, $I_{Qset}$ represents a bias parameter of the reactive current during the ride-through of the renewable energy source, $V_L$ represents the threshold voltage for the renewable energy source entering the ride-through state, and $V_t$ represents the terminal voltage of the renewable energy source.

8. The system of claim 5, wherein a state transition logic of the state transition model is as follows:

when a control mode of the renewable energy source at present is a normal state, if the terminal voltage of the renewable energy source is less than the threshold voltage, the control mode of the renewable energy source is transitioned from the normal state to the ride-through state;
when the control mode of the renewable energy source at present is the ride-through state, if the terminal voltage of the renewable energy source is greater than the threshold voltage and no ride-through recovery function is configured for the renewable energy source, the control mode of the renewable energy source is transitioned from the ride-through state to the normal state;
when the control mode of the renewable energy source at present is the ride-through state, if the terminal voltage of the renewable energy source is greater than the threshold voltage and the ride-through recovery function is configured for the renewable energy source, the control mode of the renewable energy source is transitioned from the ride-through state to a recovery state;
when the control mode of the renewable energy source at present is the recovery state, if the terminal voltage of the renewable energy source is greater than the threshold voltage and the active power of the renewable energy source is not less than an active power in the normal state, the control mode of the renewable energy source is transitioned from the recovery state to the normal state; and
when the control mode of the renewable energy source at present is the recovery state, if the terminal voltage of the renewable energy source is less than the threshold voltage, the control mode of the renewable energy source is transitioned from the recovery state to the ride-through state.

9. A computer-readable storage medium having stored thereon a computer program, the computer program is executed to perform the method of any one of claims 1 to 4.

10. An electronic device, comprising:

a processor; and
a memory for storing executable instructions by the processor;
wherein the processor is configured to read the executable instructions from the memory and execute the executable instructions to implement the method of any one of claims 1 to 4.

**11.** A computer program product, comprising computer programs or instructions that when executed on an electronic device, cause the electronic device to perform the method of any one of claims 1 to 4.

| | |
|---|---|
| establishing an electrical model of power system comprising renewable energy source, establishing a mathematical model for reflecting ride-through control characteristics of the renewable energy source, and establishing a state transition model for switching between different control modes of the renewable energy source | Operation 1 |
| determining a rated operation mode of the power system, active power output of the renewable energy source and reactive power output of the renewable energy source; performing time-domain simulation for a preset time on the mathematical model and the state transition model, and if the renewable energy source enters ride-through state during the time-domain simulation, directly entering operation 3, otherwise, outputting attention information before entering operation 3; the attention information is used for indicating a user to pay attention to a ride-through control mode of the electrical model | Operation 2 |
| based on the electrical model and under the rated operation mode of the power system, taking a point in which the renewable energy source is connected to the power grid as a PQ point, setting an active power of the point in which the renewable energy source is connected to the power grid as the active power output of the renewable energy source, setting a reactive power of the point in which the renewable energy source is connected to the power grid as the reactive power output of the renewable energy source, and calculating power flow of the power system to obtain a terminal voltage of the renewable energy source | Operation 3 |
| based on the electrical model and the mathematical model and under the rated operation mode of the power system, connecting a constant impedance load and a constant current load to a Point of Connection (POC) bus of the electrical model, setting the active power and the reactive power of the point in which the renewable energy source is connected to the power grid to 0, and calculating the power flow of the power system to obtain a bus voltage of the POC bus | Operation 4 |
| comparing the terminal voltage with a threshold voltage for the renewable energy source entering the ride-through state; if the terminal voltage is greater than the threshold voltage, entering operation 6; otherwise, entering operation 7 | Operation 5 |
| comparing the bus voltage with the threshold voltage; if the bus voltage is greater than the threshold voltage, outputting a first prompt information; if the bus voltage is not greater than the threshold voltage, outputting a second prompt information; the first prompt information is used for indicating that there is no risk of voltage instability caused by ride-through and switching, and the second prompt information is used for indicating that there is a risk of a voltage instability or a renewable energy source off-grid caused by continuous ride-through and non-recovery of the renewable energy source | Operation 6 |
| comparing the bus voltage with the threshold voltage; if the bus voltage is greater than the threshold voltage, outputting a third prompt information; if the bus voltage is not greater than the threshold voltage, outputting a fourth prompt information; the third prompt information is used for indicating that there is a risk of voltage and power oscillations or a risk of the renewable energy source off-grid caused by the renewable energy source repeatedly entering and exiting ride-through, and the fourth prompt information is used for indicating that there is a risk of voltage instability or the renewable energy source off-grid caused by continuous ride-through and non-recovery of the renewable energy source | Operation 7 |

**FIG. 1**

**FIG. 2**

**FIG. 3**

410

Model Establishing Section

420

Determining Section

430

First Calculation Section

440

Second Calculation Section

450

Comparison Section

460

First Prompt Section

470

Second Prompt Section

**FIG. 4**

Processor — 51

53 — Input Unit    Memory    Output Unit — 54

Electronic Device 50

52

**FIG. 5**

## INTERNATIONAL SEARCH REPORT

| International application No. |
| --- |
| **PCT/CN2023/138820** |

### A.    CLASSIFICATION OF SUBJECT MATTER

H02J3/12(2006.01)i

According to International Patent Classification (IPC) or to both national classification and IPC

### B.    FIELDS SEARCHED

Minimum documentation searched (classification system followed by classification symbols)

IPC：H02J3/-

Documentation searched other than minimum documentation to the extent that such documents are included in the fields searched

Electronic data base consulted during the international search (name of data base and, where practicable, search terms used)

CNABS; CNTXT; VEN; DWPI; WOTXT; EPTXT; USTXT; CNKI; IEEE: 电网, 电压, 稳定, 穿越, 状态, 转移, 时域, 门槛, 母线, power grid, voltage, stable, ride through, state, transfer, time domain, threshold, bus bar

### C.    DOCUMENTS CONSIDERED TO BE RELEVANT

| Category* | Citation of document, with indication, where appropriate, of the relevant passages | Relevant to claim No. |
| --- | --- | --- |
| PX | CN 117220296 A (CHINA ELECTRIC POWER RESEARCH INSTITUTE CO., LTD.) 12 December 2023 (2023-12-12) claims 1-10, description, paragraphs 21-65, and figures 1-5 | 1-11 |
| A | CN 116505529 A (CHINA ELECTRIC POWER RESEARCH INSTITUTE CO., LTD. et al.) 28 July 2023 (2023-07-28) description, paragraphs 41-106, and figures 1-6 | 1-11 |
| A | CN 111541239 A (STATE GRID JIANGSU ELECTRIC POWER CO., LTD., ECONOMIC RESEARCH INSTITUTE et al.) 14 August 2020 (2020-08-14) description, paragraphs 46-104, and figures 1-2 | 1-11 |
| A | CN 108736508 A (CHINA ELECTRIC POWER RESEARCH INSTITUTE STATE GRID CORP. CHINA et al.) 02 November 2018 (2018-11-02) entire document | 1-11 |
| A | CN 111934326 A (CHINA ELECTRIC POWER RESEARCH INSTITUTE CO., LTD. et al.) 13 November 2020 (2020-11-13) entire document | 1-11 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 July 2024** | **11 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/138820** |

### C.    DOCUMENTS CONSIDERED TO BE RELEVANT

| Category* | Citation of document, with indication, where appropriate, of the relevant passages | Relevant to claim No. |
| --- | --- | --- |
| A | US 11362539 B1 (KING ABDULAZIZ UNIVERSITY) 14 June 2022 (2022-06-14)<br>　　entire document | 1-11 |
| A | 孙华东 等 (SUN, Huadong et al.). "电力系统安全稳定性的定义与分类探析 (Research on Definition and Classification of Power System Security and Stability)"<br>中国电机工程学报 (Proceedings of the CSEE),<br>Vol. 42, No. 21, 05 November 2022 (2022-11-05), pages 7796-7809<br>ISSN: 0258-8013,<br>　　entire document | 1-11 |

Form PCT/ISA/210 (second sheet) (July 2022)

**INTERNATIONAL SEARCH REPORT**
**Information on patent family members**

| International application No. |
| --- |
| **PCT/CN2023/138820** |

| Patent document cited in search report | | | Publication date (day/month/year) | Patent family member(s) | | | Publication date (day/month/year) |
| --- | --- | --- | --- | --- | --- | --- | --- |
| CN | 117220296 | A | 12 December 2023 | CN | 117220296 | B | 09 January 2024 |
| CN | 116505529 | A | 28 July 2023 | None | | | |
| CN | 111541239 | A | 14 August 2020 | None | | | |
| CN | 108736508 | A | 02 November 2018 | CN | 108736508 | B | 01 October 2021 |
| CN | 111934326 | A | 13 November 2020 | WO | 2022000898 | A1 | 06 January 2022 |
| US | 11362539 | B1 | 14 June 2022 | None | | | |

Form PCT/ISA/210 (patent family annex) (July 2022)

## EP 4 583 344 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023114821648
- CN 115940173 B

**25**